# EUROPEAN PATENT APPLICATION

(11) **EP 4 358 422 A1**
(43) Date of publication of application: **24.04.2024**
(21) Application number: 22202263.4
(22) Date of filing: 18.10.2022
(51) Int. Cl.: H04B 5/00, G06K 7/00, G06K 7/10, H04B 7/10

(54) **CONFIGURING ANTENNA POLARIZATIONS**

(71) Applicant: Nokia Technologies Oy, 02610 Espoo (FI)
(72) Inventor: SVENDSEN, Simon, 9000 Aalborg (DK); VEJLGAARD, Benny, 9260 Gistrup (DK); HARREBEK, Johannes, 9000 Aalborg (DK)
(74) Representative: Sayer, Robert David

(57) **Abstract**

An apparatus, method and computer program is disclosed. The apparatus may comprise means for providing information associated with an illumination signal, transmitted by an illuminator, back-scatted from a tag and received by an antenna of the illuminator using a first linear polarization configuration. The apparatus may also comprise means for determining that a different antenna polarization is required at the illuminator for the tag. The apparatus may also comprise means for configuring the antenna of the illuminator to use a different one of a plurality of linear polarization configurations for the tag.

## Description

### TECHNICAL FIELD

Implementations of the present disclosure generally relate to the field of telecommunication, and in particular, to devices, methods and computer readable media for configuring antenna polarizations in, for example, an Internet of Things (IoT) system.

### BACKGROUND

Regarding Internet of Things (IoT) applications, the Third Generation Partnership Project (3GPP) has specified Narrow Band Internet of Things (NB-IoT), enhanced Machine-Type Communication (eMTC) and NR reduced capabilities (RedCap) before Release 18 to satisfy the requirements on low cost and low power devices for wide area IoT communication. These IoT devices usually consume tens or hundreds of milliwatts power during transceiving while the cost is a few dollars. However, to achieve the internet of everything, IoT devices with ten or even a hundred times lower cost and power consumption are needed, especially for a large number of applications requiring batteryless devices.

### SUMMARY

In general, example implementations of the present disclosure provide devices, methods and computer readable media for changing illuminator and/or reader antenna polarization configurations in multistatic tag backscatter sessions.

According to a first aspect, there is described an apparatus comprising: means for providing information associated with an illumination signal, transmitted by an illuminator, back-scatted from a tag and received by an antenna of the illuminator using a first linear polarization configuration; means for determining that a different antenna polarization is required at the illuminator for the tag; and means for configuring the antenna of the illuminator to use a different one of a plurality of linear polarization configurations for the tag.

The determining means may be configured to determine that a different antenna polarization optimization is required based on the information associated with the back-scattered illumination signal for the tag.

The information associated with the back-scattered illumination signal may comprise respective energy levels associated with one or more harmonics of said back-scattered illumination signal for the tag.

The information associated with the back-scattered illuminations signal may comprise respective energy levels associated with at least f2 and f3 harmonics of the said back-scattered illumination signal for the tag.

The determining means may be configured to determine that a different antenna polarization optimization is required based on respective energy levels associated with said one or more harmonics being below a predetermined threshold.

The determining means may be configured to determine that a different antenna polarization is required based on identifying movement and/or rotation of the illuminator and/or identification of one or more new tags for being illuminated by the illuminator.

The determining means may be configured to determine that a different antenna polarization is required based on the illuminator being unable to identify the tag and/or to decode data encoded in the information associated with the back-scattered illumination signal.

The determining means may be further configured to determine, subsequent to configuring the antenna of the illuminator to use a different linear polarization configuration, if a different linear antenna polarization is still required.

Responsive to determining that antenna polarization is still required at the illuminator, the configuring means may be further configured to configure the antenna of the illuminator to use a different one of the plurality of linear polarization configurations unless all linear polarization configurations have been used.

The identifying means may be configured to identify, for each of a plurality of tags, either: a linear polarization configuration for which a different polarization configuration is not required for the tag, or if all linear polarization configurations have been used for the tag, the most optimal linear polarization configuration, wherein the apparatus further comprises means for using the identified linear polarization configuration for each of the plurality of passive tags in a round-robin manner.

The apparatus may be an illuminator for transmitting illumination signals in a communications network.

According to a first aspect, there is described an apparatus comprising: means for receiving, from a network node, an indication as to whether an illuminator is aligning its polarization to a tag; and means for determining if a different antenna polarization for an antenna is required at a reader based on the illuminator not aligning its polarization to the tag.

If the means determines that a different antenna polarization configuration is required at the reader, the apparatus may be further configured to configure the reader to use a different one of a plurality of linear antenna configurations for the tag.

The apparatus may be configured to determine that a different antenna polarization optimization is required at the reader based on the information associated with the back-scattered illumination signal for the tag.

The information associated with the back-scattered illumination signal may comprise respective energy levels associated with one or more harmonics of said back-scattered illumination signal for the tag.

The information associated with the back-scattered illuminations signal may comprise respective energy levels associated with at least f2 and f3 harmonics of the said back-scattered illumination signal.

Determining that a different antenna polarization optimization is required at the reader may be based on respective energy levels associated with said one or more harmonics being below a predetermined threshold.

Determining that a different antenna polarization configuration is required may be based on identifying movement and/or rotation of the reader and/or identification of one or more new passive tags being for being read by the reader.

Determining that a different antenna polarization configuration is required may be based on the reader being unable to identify the passive tag and/or to decode data encoded in the information associated with the back-scattered illumination signal.

The apparatus may further be configured to determine, subsequent to configuring the antenna of the reader to use a different linear polarization configuration, if a different linear antenna polarization is still required.

Responsive to determining that a different linear antenna polarization is still required at the illuminator, the apparatus may be further configured to configure the antenna of the reader to use a different one of the plurality of linear polarization configurations unless all linear polarization configurations have been used.

The apparatus may be configured to identify, for each of a plurality of tags, either: a linear polarization configuration for which a different polarization configuration is not required for the passive tag, or if all linear polarization configurations have been used for the passive tag, the most optimal linear polarization configuration, wherein the apparatus is further configured to use the identified linear polarization configuration for each of the plurality of passive tags in a round-robin manner.

The apparatus may be a reader for reading back-scattered illumination signals in a communications network.

According to a third aspect, this specification describes a method, the method comprising providing information associated with an illumination signal, transmitted by an illuminator, back-scattered from a tag and received by an antenna of the illuminator using a first linear polarization configuration; determining that a different antenna polarization is required at the illuminator for the tag; and configuring the antenna of the illuminator to use a different one of a plurality of linear polarization configurations for the tag.

The method may determine that a different antenna polarization optimization is required based on the information associated with the back-scattered illumination signal for the tag.

The information associated with the back-scattered illumination signal may comprise respective energy levels associated with one or more harmonics of said back-scattered illumination signal for the tag.

The information associated with the back-scattered illuminations signal may comprise respective energy levels associated with at least f2 and f3 harmonics of the said back-scattered illumination signal for the tag.

The method may determine that a different antenna polarization optimization is required based on respective energy levels associated with said one or more harmonics being below a predetermined threshold.

The method may determine that a different antenna polarization is required based on identifying movement and/or rotation of the illuminator and/or identification of one or more new tags for being illuminated by the illuminator.

The method may determine that a different antenna polarization is required based on the illuminator being unable to identify the tag and/or to decode data encoded in the information associated with the back-scattered illumination signal.

The method may determine, subsequent to configuring the antenna of the illuminator to use a different linear polarization configuration, if a different linear antenna polarization is still required.

Responsive to determining that antenna polarization is still required at the illuminator, the method may configure the antenna of the illuminator to use a different one of the plurality of linear polarization configurations unless all linear polarization configurations have been used.

The method may comprise, for each of a plurality of tags, identifying either a linear polarization configuration for which a different polarization configuration is not required for the tag, or if all linear polarization configurations have been used for the tag, the most optimal linear polarization configuration, wherein the method further comprises using the identified linear polarization configuration for each of the plurality of passive tags in a round-robin manner.

The method may be performed by an illuminator for transmitting illumination signals in a communications network.

According to a fourth aspect, this specification describes a method, the method comprising: receiving, from a network node, an indication as to whether an illuminator is aligning its polarization to a tag; and determining if a different antenna polarization for an antenna is required at a reader based on the illuminator not aligning its polarization to the tag.

The method may comprise, if a different antenna polarization configuration is required at the reader, configuring the reader to use a different one of a plurality of linear antenna configurations for the tag.

The method may determine that a different antenna polarization optimization is required at the reader based on the information associated with the back-scattered illumination signal for the tag.

The information associated with the back-scattered illumination signal may comprise respective energy levels associated with one or more harmonics of said back-scattered illumination signal for the tag. The information associated with the back-scattered illuminations signal comprises respective energy levels associated with at least f2 and f3 harmonics of the said back-scattered illumination signal. Determining that a different antenna polarization optimization is required at the reader may be based on respective energy levels associated with said one or more harmonics being below a predetermined threshold.

Determining that a different antenna polarization configuration is required may be based on identifying movement and/or rotation of the reader and/or identification of one or more new passive tags being for being read by the reader.

Determining that a different antenna polarization configuration is required may be based on the reader being unable to identify the passive tag and/or to decode data encoded in the information associated with the back-scattered illumination signal.

The method may determine, subsequent to configuring the antenna of the reader to use a different linear polarization configuration, if a different linear antenna polarization is still required.

Responsive to determining that a different linear antenna polarization is still required at the illuminator, the method may configure the antenna of the reader to use a different one of the plurality of linear polarization configurations unless all linear polarization configurations have been used.

The method may comprise, for each of a plurality of tags, identifying either a linear polarization configuration for which a different polarization configuration is not required for the tag, or if all linear polarization configurations have been used for the tag, the most optimal linear polarization configuration, wherein the method further comprises using the identified linear polarization configuration for each of the plurality of passive tags in a round-robin manner.

The method may be performed at a reader for reading back-scattered illumination signals in a communications network.

According to a fifth aspect, this specification describes a computer program comprising instructions for causing an apparatus to perform at least the following: providing information associated with an illumination signal, transmitted by an illuminator, back-scattered from a tag and received by an antenna of the illuminator using a first linear polarization configuration; determining that a different antenna polarization is required at the illuminator for the tag; and configuring the antenna of the illuminator to use a different one of a plurality of linear polarization configurations for the tag.

According to a sixth aspect, this specification describes a computer program comprising instructions for causing an apparatus to perform at least the following: receiving, from a network node, an indication as to whether an illuminator is aligning its polarization to a tag; and determining if a different antenna polarization for an antenna is required at a reader based on the illuminator not aligning its polarization to the tag.

According to a seventh aspect, this specification describes a computer-readable medium (such as a non-transitory computer-readable medium) comprising program instructions stored thereon for performing at least the following: providing information associated with an illumination signal, transmitted by an illuminator, back-scattered from a tag and received by an antenna of the illuminator using a first linear polarization configuration; determining that a different antenna polarization is required at the illuminator for the tag; and configuring the antenna of the illuminator to use a different one of a plurality of linear polarization configurations for the tag.

According to an eighth aspect, this specification describes a computer-readable medium (such as a non-transitory computer-readable medium) comprising program instructions stored thereon for performing at least the following: receiving, from a network node, an indication as to whether an illuminator is aligning its polarization to a tag; and determining if a different antenna polarization for an antenna is required at a reader based on the illuminator not aligning its polarization to the tag.

According to a ninth aspect, this specification describes an apparatus comprising: at least one processor; and at least one memory including computer program code which, when executed by the at least one processor, causes the apparatus to: provide information associated with an illumination signal, transmitted by an illuminator, back-scattered from a tag and received by an antenna of the illuminator using a first linear polarization configuration; determine that a different antenna polarization is required at the illuminator for the tag; and configure the antenna of the illuminator to use a different one of a plurality of linear polarization configurations for the tag.

According to a ninth aspect, this specification describes an apparatus comprising: at least one processor; and at least one memory including computer program code which, when executed by the at least one processor, causes the apparatus to: receive, from a network node, an indication as to whether an illuminator is aligning its polarization to a tag; and determine if a different antenna polarization for an antenna is required at a reader based on the illuminator not aligning its polarization to the tag.

### BRIEF DESCRIPTION OF THE DRAWINGS

Through the more detailed description of some implementations of the present disclosure in the accompanying drawings, the above and other objects, features and advantages of the present disclosure will become more apparent, wherein:
Fig. 1A is a schematic diagram of a radio frequency identification (RFID) system;
Fig. 1B is a schematic diagram of another RFID system;
Fig. 2 illustrates an example communications network in which implementations of the present disclosure can be implemented;
Fig. 3 is a flow diagram showing operations that may be performed at an illuminator of the Fig. 2 network according to one or more example embodiments;
Fig. 4 is another flow diagram showing operations that may be performed at an illuminator of the Fig. 2 network according to one or more example embodiments;
Fig. 5 is a flow diagram showing operations that may be performed at one or more readers of the Fig. 2 network according to one or more example embodiments;
Fig. 6 is another flow diagram showing operations that may be performed at one or more readers of the Fig. 2 network according to one or more example embodiments;
Fig. 7 is a schematic diagram of an antenna and feeder structure that may be used in one or more example embodiments;
Fig. 8 is a table indicating configuration parameters for the Fig. 7 feeder structure that may be used in one or more example embodiments;
Fig. 9 is a schematic diagram of part of a communications network as used by a computer simulator for explaining one or more example embodiments;
Figs. 10A - 10C show different sets of computer simulation results utilizing the Fig. 9 part of the communications network;
Fig. 11 is a simplified block diagram of an apparatus that is suitable for implementing one or more example embodiments; and
Fig. 12 is a block diagram of an example computer readable medium in accordance with one or more example embodiments.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry)
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, a core network device (such as LMF) and so forth, depending on the applied terminology and technology.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "tag" may be a passive tag or an ambient power-enabled tag. A passive tag refers to a batteryless tag. An ambient power-enabled tag refers to an an IoT device, which is either battery-less or has limited energy storage capability, e.g. using a capacitor, where the energy is provided through the harvesting of radio waves, light, motion, heat or any power source that can be seen as suitable. For convenience, the term "passive tag" may be used to cover both types of tag.

As described above, to achieve the internet of everything, IoT devices with ten or even a hundred times lower cost and power consumption are needed, especially for a large number of applications requiring batteryless devices.

### Typical use cases

The number of IoT connections has been growing rapidly in recent years and is predicted to be hundreds of billions by 2030. With more and more 'things' expected to be interconnected for improving production efficiency and increasing comforts of life, it demands further reduction of size, cost, and power consumption for IoT devices. In particular, regular replacement of battery for all the IoT devices is impractical due to the tremendous consumption of materials and manpower. It has become a trend to use energy harvested from environments to power IoT devices for self-sustainable communications, especially in applications with a huge number of devices (e.g., ID tags and sensors). A typical user case may include identification of one or more remote passive tags to locate their proximity to an illuminating node, which may therefore provide an inventory management application, e.g. identifying the presence of one or potentially many passive tags in a warehouse. Another user case may include positioning by means of determining a range (via determining a delay) of one or more remote passive tags with respect to the illuminating node and two or more reader nodes, each capable of reporting their own position, thereby for estimating a position of the one or more remote passive tags using multilateration techniques.

### 3GPP technologies

Example embodiments may be suited to 3GPP technologies and networks. The most critical issue with existing 3GPP technologies for the target use cases is the capability of cooperating with energy harvesting considering limited device size. Cellular devices usually consume tens or even hundreds of milliwatts power for transceiving processing. Taking NB-IoT module for example, the typical current consumption for receive processing is about 60mA with supply voltage higher than 3.1V, while 70mA for transmitting processing at OdBm transmit power. The output power provided by typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with a rechargeable battery or supercapacitor. However, there are still a few problems to be solved. Firstly, both a rechargeable battery and a supercapacitor may suffer from shortened lifetime in practical cases. It is hard to provide constant charging current or voltage by energy harvesting, while longtime continuous charging is needed due to the very small output power from energy harvester. Inconstant charging current and longtime continuous charging are both harmful to battery life. For a supercapacitor, its lifetime will be significantly reduced in high temperature environments (e.g., less than 3 years at 50 degrees centigrade). Secondly, device size will be significantly increased. As a small size button battery can only provide current of a few tens of milliamps, a battery with much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module. Thirdly, both rechargeable batteries and supercapacitors can be more expensive than the module itself. Even purchased in large quantities, the cost of a suitable battery or supercapacitor may reach one or a few dollars, which nearly doubles the cost of the device.

### Non-3GPP technologies

RFID is the most well-known technology supporting battery less tags (devices). The power consumption of commercial passive RFID tags can be as low as 1 microwatt. The key techniques enabling such low power consumption are envelope detection for downlink data reception, and backscatter communication for uplink data transmission. RFID is designed for short-range communications, whose typical effective range is less than 10 meters. As the air interface of RFID almost remains unchanged since 2005, the too-simple transmission scheme becomes the obstacle of improving its link budget and capability of supporting scalable network.

Attracted by the extremely low power consumption of backscatter communication, many non-3GPP technologies begin to put efforts into related research, such as Wi-Fi, Bluetooth, UWB, and LORA. Various research shows that a few or tens of microwatts power consumption can be supported for passive tags based on or with small modifications to the above air interfaces. A significant proportion of the studies are targeting at long range communication. Among them, a LORA tag implemented with commercial off-the-shelf components can send its sensing data to the receiver of 381 meters away. Currently, most of the studies are focusing on independent detailed techniques for various optimization targets. It is hard to see a comprehensive system design fully meeting the requirements of the target use cases. However, the standardization of those technologies is agile and quick, as the industries usually follow some de facto standards. It means that many products in the market will follow even a private standard once it shows competitiveness in some applications.

### Harmonic backscatter tags

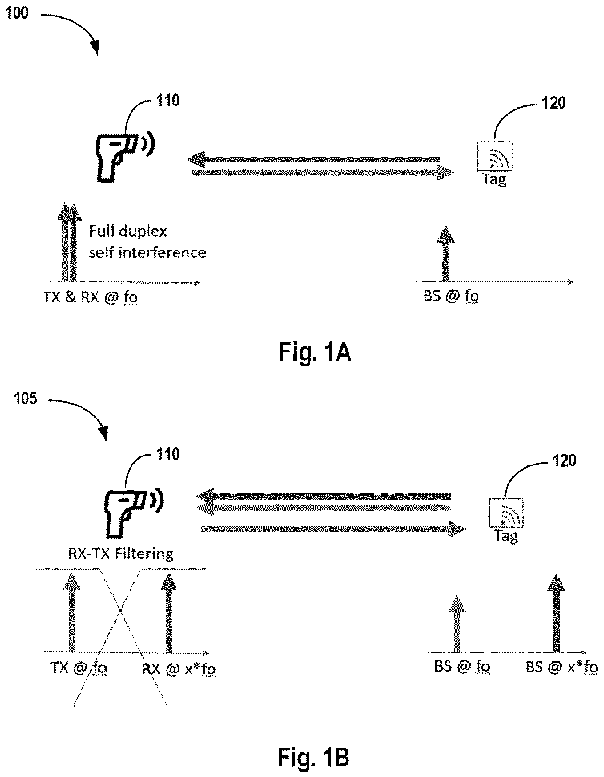

Fig. 1A illustrates a schematic diagram of an RFID system 100 which is useful for understanding example embodiments and may be applied to 3GPP technologies. As depicted in Fig. 1A, the RFID system 100 comprises an RFID reader 110 and an RFID tag 120. The RFID tag 120 is configured as an RFID monostatic backscatter tag. The RFID tag 120 may be a passive tag or an ambient power-enabled tag, the latter being an IoT device, which is either battery-less or has limited energy storage capability, e.g. using a capacitor, where the energy is provided through the harvesting of radio waves, light, motion, heat or any power source that can be seen as suitable. In example embodiments, the term "tag" or "passive tag" is intended to cover ambient power-enabled tags or similar.

The RFID reader 110 is also the tag illuminator and as such the RFID reader 110 needs to receive the back scattered (BS) signal from the RFID tag 120 at a frequency f0 while transmitting an illumination signal, sometimes called an activation signal, at the same frequency f0 which is enabled, e.g., by expensive RF frontend with circulator.

Passive tags with illuminator harmonic generation are reported with the aim to relax the tag reader full duplex challenges by receiving on a harmonic of the illumination frequency thereby removing the self-interference issues by frequency domain separation and filtering, which provides for significant cost reduction. This is depicted in Fig. 1B.

Fig. 1B illustrates a schematic diagram of another RFID system 105. As depicted in Fig. 1B, the RFID reader 110 transmits an illumination signal at a frequency f0 to the RFID tag 120. The RFID tag 120 transmits BS signals at the frequency f0 and at a frequency x^{∗}f0, where x is a positive integer which is equal to or greater than 2. Thus, the self-interference issues are removed.

For harmonic frequency backscattering tags, the level of the generated harmonic is highly dependent on the level of the illumination signal which again depends on the illuminator transmission power level, the distance between the illuminator and tag as well as the orientation of the tag (antenna gain in direction of the illuminator). Another issue is polarization alignment between (i) the illuminator and the tag, and (ii) the tag and each of the one or more readers. The severity of this alignment issue may be mitigated against using, for example, circular polarized antennas at the illuminator and reader and a linear polarized antenna on the tag, or using a circular polarized antenna on the tag and linear polarized antennas on the illuminator and reader. However, a 3 dB conversion loss is found for each change in polarization. For a passive IoT system with a bi or multi -static setup, there may be an average loss of 6 dB. Example embodiments may involve enabling the illuminator and the one or more readers to employ linear polarization to align their antenna polarizations to that of the tag. Where there are a plurality of tags, the illuminator and the one or more readers may align their antenna polarizations to each of the plurality of tags, which may be performed in a round-robin manner. The illuminator and one or more readers, however provided, may be provided with antennas capable of having a plurality of different polarization configurations, such as linear polarization configurations. The different linear polarization configurations may be changed responsive to a trigger event, i.e. an event that determines that a different linear polarization configuration is required to optimize alignment and therefore performance. In this sense, the term "optimize" does not necessarily mean the alignment meets an ideal scenario, and the term may be interchanged with "improve." In some example embodiments, one or both of the illuminator and a given reader may autonomously determine to change from a current linear polarization configuration to a different linear polarization configuration.

As such, some readers configured to be active for a tag identification session may be able to receive the harmonic signal generated by the tag when they might otherwise not be able to due to, inter alia, polarization misalignment.

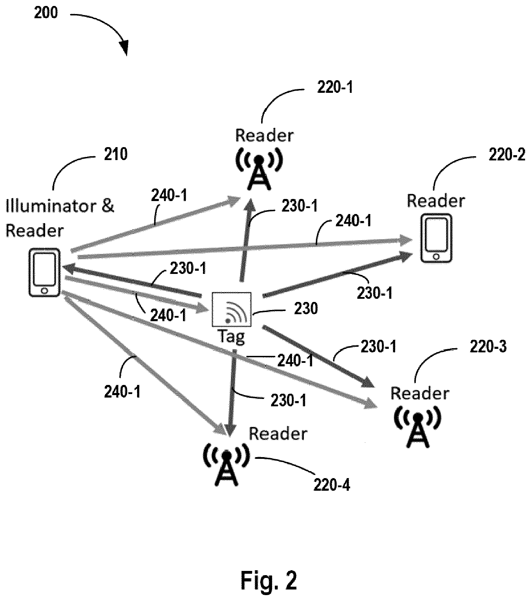

Fig. 2 illustrates a schematic diagram of an example communication network 200 in which implementations of the present disclosure can be implemented. As shown in Fig. 2, the communication network 200 may comprise an illuminator 210 for a passive tag 230, one or more readers 220-1, 220-2, 220-3 and 220-4 for the passive tag 230 as well as the passive tag 230. Hereinafter, for brevity, the illuminator 210 for the passive tag 230 is also referred to as illuminator 210. The one or more readers 220-1, 220-2, 220-3 and 220-4 for the passive tag 230 may be collectively or individually referred to as reader 220 for the passive tag 230. Hereinafter, for brevity, the reader 220 for the passive tag 230 is also referred to as reader 220.

The illuminator 210 may transmit an illumination signal 240-1 to the readers 220-1, 220-2, 220-3, 220-4 and the passive tag 230, respectively. The illumination signal 240-1 may be received by the tag 230, as intended, but also by the readers 220, as interference.

When the illumination signal 240-1 interacts with an antenna of the passive tag 230, it will be scattered by the antenna in different directions. The scatter along an incident direction of the illumination signal 240-1 is called backscatter.

In some embodiments, the reader 220 may be an access network device (for example, a gNB) or a terminal device, e.g. a user equipment (UE). The readers 220-1, 220-2, 220-3 and 220-4 may receive a back-scattered signal 230-1 from the passive tag 230.

In some embodiments, the illuminator 210 may have full duplex hardware capabilities. In such embodiments, the illuminator 210 may also act as a reader receiving a back-scattered signal 230-1 from the passive tag 230.

The back-scattered signal 230-1 is generated from the illumination signal 240-1. The back-scattered signal 230-1 is a harmonic of the illumination signal 240-1. Hereinafter, a harmonic of the illumination signal is also referred to as a harmonics signal or back-scattered signal.

An illumination signal may be decomposed into sine or cosine components with the same frequency as the activation signal and an integer multiple of a frequency of the illumination signal. A sine or cosine component whose frequency is an integer multiple of the frequency of the illumination signal is called a harmonic or harmonic signal. A harmonic frequency refers to a frequency of the harmonic. Hereinafter, a harmonic is also referred to as a back-scattered signal.

For the harmonic frequency backscattering tag, the level of the generated harmonic is highly dependent on the level of the illumination signal which again depends on the transmission power level of the illuminator 210, a distance between the illuminator 210 and tag and the orientation of the the passive tag 230 (antenna gain in direction of the illuminator 210).

It is to be understood that the number of the illuminator 210, the readers 220 and the the passive tag 230 in Fig. 2 is given for the purpose of illustration without suggesting any limitations to the present disclosure. The communication network 200 may include any suitable number of devices adapted for implementing implementations of the present disclosure.

The communications in the communication network 200 may conform to any suitable standards including, but not limited to, Global System for Mobile Communications (GSM), LTE, LTE-Evolution, LTE-Advanced (LTE-A), Wideband Code Division Multiple Access (WCDMA), Code Division Multiple Access (CDMA), GSM EDGE Radio Access Network (GERAN), Machine Type Communication (MTC) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols.

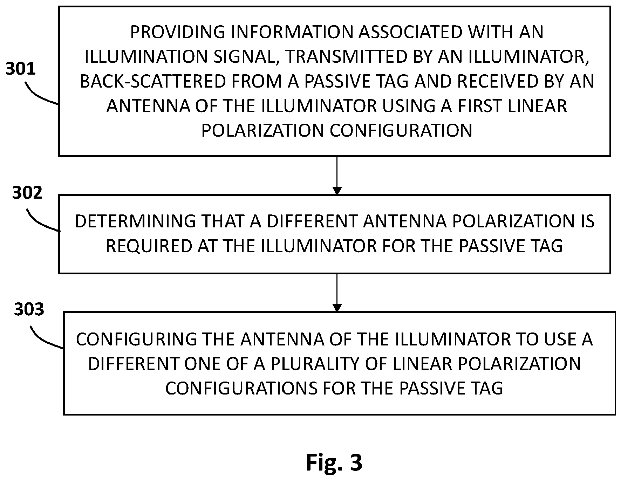

Fig. 3 is a flow diagram showing operations that may be performed in one or more example embodiments. The operations may be performed in hardware, software, firmware of a combination thereof. The operations may be performed, individually or collectively, by a means, wherein the means may comprise at least one processor, and at least one memory storing instructions that, when executed by the at least one processor, cause performance of the operations. The operations may be performed at or by an illuminator, for example the illuminator 210 shown in Fig. 2 which may also serve as a reader.

A first operation 301 may comprise providing information associated with an illumination signal, transmitted by an illuminator, back-scattered from a passive tag and received by an antenna of the illuminator using a first linear polarization configuration.

The term "providing" may comprise "receiving", "accessing" or "generating" for example.

For example, the illuminator 210 in Fig. 2 may transmit an illumination signal and information associated with the illumination signal may be received by an antenna of the illuminator as a back-scattered illumination signal using the first linear polarization configuration.

A second operation 302 may comprise determining that a different antenna polarization is required at the illuminator for the passive tag. Examples methods of such a determining operation or operations will be described later on.

A third operation 303 may comprise configuring the antenna of the illuminator to use a different one of a plurality of linear polarization configurations for the passive tag.

In some cases, there may be a plurality of passive tags allocated to the illuminator; for example, a network node of the IoT network may inform the illuminator of respective identities of a plurality of passive tags for which identification is required as part of an inventory process and/or for which positioning is to be performed using multilateration. The network node may be a location management entity (LME) or location management function (LMF) for example. In such cases, a back-scattered illumination signal for each tag identifier (tag ID) may be used to determine if a different antenna polarization is required for illuminating and/or reading particular ones of the tags. It may be that a different antenna polarization is required for illuminating and/or reading only a subset of the tags. Sometimes, tags may be actively muted to save on energy resources and/or to avoid interference with less powerful back-scattered signals from other tags which may be further away from the illuminator.

In the case of multiple tags, the following steps relating to changing antenna polarization configurations may relate to a subset of tags determined to require optimization (re-configuration). Different linear polarization configurations may be used in a round-robin manner, i.e. one after the other in time, in a predetermined order, to illuminate the different tags.

For example, consider the illuminator 210 and reader 220-1 shown in Fig. 2. The illuminator 210 may comprise an antenna configured or configurable for transmitting and receiving signals using linear polarization. The antenna may be configurable by means of an associated feeder architecture to be mentioned below as one example. The illuminator 210 may transmit an illumination signal using a first linear polarization configuration, e.g. a default or current configuration, to determine the presence and/or range (delay) of the tag 230. The tag 230 may be a passive or ambient power-enabled tag as mentioned above. The illuminator 210 may be configured to transmit the illumination signal autonomously, e.g. at a predetermined time or at predetermined intervals, or in response to an internal event. Additionally, or alternatively, the illuminator 210 may be requested to transmit the illumination signal by another node of the communication network 200 which may, for example be an LME (not shown). The tag 230 may comprise an antenna configured or configurable for transmitting and receiving signals using one of a plurality of different linear polarization configurations. The tag 230 may typically have a fixed linear polarization which may depend on the physical orientation of the tag. The tag 230 may receive and transmit signals responsive to receiving the illumination signal. Responsive to a trigger event, which may be based on information associated with the back-scattered signal 230-1 received by a reader system of the illuminator 210, it may be determined whether the same or a different linear polarization configuration should be used. Similarly, one or more other readers 220, if configured by the illuminator 210 or LME (or similar) to listen for the back-scattered illuminator signal 230-1, may also comprise an antenna configured or configurable for transmitting and receiving signals using linear polarization. The other readers 220 may similarly determine if the same or a different linear polarization configuration should be used at their end.

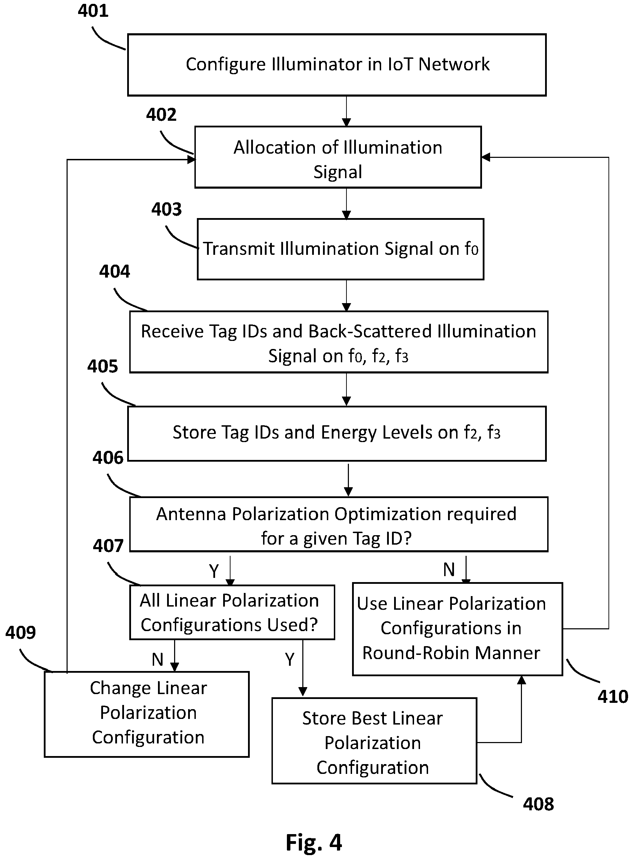

Fig. 4 is a further flow diagram showing operations that may be performed in one or more example embodiments. The operations may be performed in hardware, software, firmware of a combination thereof. The operations may be performed, individually or collectively, by a means, wherein the means may comprise at least one processor, and at least one memory storing instructions that, when executed by the at least one processor, cause performance of the operations. The operations may be performed at or by an illuminator, for example the illuminator 210 shown in Fig. 2 which may also serve as a reader.

A first operation 401 may comprise configuring the illuminator 210 in an IoT network, e.g. the communications network 200. This may involve an external node, such as an LME, informing the illuminator of its role as an illuminator and, for example, whether it is for the purposes of determining presence of one or more tags (identified with tag IDs) or determining their respective ranges (delays) for positioning.

A second operation 402 may comprise allocation of the illumination signal. This may involve an external node, such as the LME, allocating time-frequency resources for transmitting the illumination signal at a frequency f0. This allocation may be done on a per-tag basis, i.e. for each tag ID to be illuminated in the communications network 200 as part of a session.

A third operation 403 may comprise transmitting the illumination signal on f0 according to the time-frequency allocation in the second operation 402.

A fourth operation 404 may comprise receiving one or more tag IDs and back-scattered illumination signals according to the time-frequency allocation in the second operation 402.

A fifth operation 405 may comprise storing the tag IDs and received energy (e.g. power) levels for one or more particular harmonics of f0, in this case the second and third harmonics f2, f3.

A sixth operation 406 may comprise determining if antenna polarization optimization (or improvement) is required for a given tag ID.

This determination may be based on the information associated with the back-scattered illumination signal for each of the one or more passive tags. For example, the determination may be based on respective energy levels associated with the one or more harmonics stored in the fifth operation 405. For example, if the values for the second and third harmonics f2, f3 are below one or more predetermined threshold values, this may trigger an optimization event. For example, if no tag ID was identifiable in the expected time-frequency resource and/or the respective energy levels associated with the one or more harmonics stored in the fifth operation 405 are insufficient to decode meaningful data, this may trigger an optimization event. For example, if the illuminator 210 moves and/or rotates (something it may be able to detect itself using inertial sensors and/or a GNSS receiver, or be informed about by an external node) this may trigger an optimization event. For example, if one or more new tags have been identified by an LME as joining the communications network 200, this may trigger an optimization event. For example, an optimization event may be triggered according to a time, i.e. at predetermined or dynamically changeable intervals using a timer associated with the illuminator 210.

If antenna polarization optimization is required according to the sixth operation 406, a seventh operation 407 may determine if all of a predetermined number of linear polarization configurations have been used for the particular tag ID. If yes, then an eighth operation 408 may comprise storing the best linear polarization configuration for the particular tag ID, e.g. on one or more memories of the illuminator 210. The best linear polarization configuration may be that which, during the optimization operations, produced the highest energy levels on the one or more predetermined harmonics. Different or other parameters and/or criteria may be used. The process then moves to a tenth operation 410 to be described below. Returning to the seventh operation 407, if one or more linear polarization configurations have not yet been used, a ninth operation 409 may comprise changing the current linear polarization configuration to a different linear polarization configuration. There may be a particular order as to which configurations are used. The process then returns to the second operation 402 for repeating the process at a later time.

Returning to the sixth operation 406, if antenna polarization optimization is not required, the current linear antenna polarization configuration may be maintained. The process may move to the tenth operation 410 whereby the current or best linear antenna polarization configuration is used for the particular tag ID. Where there are a plurality of tag IDs, then the illuminator 210 cycles through the appropriate linear antenna polarization configurations in a round-robin manner based on which tag IDs are being illuminated at a given time. The tenth operation 410 then returns to the second operation 402 for repeating the process at a later time.

Operations associated with readers will now be considered, e.g. the one or more readers 220 in Fig. 2 which are separate from the illuminator 210.

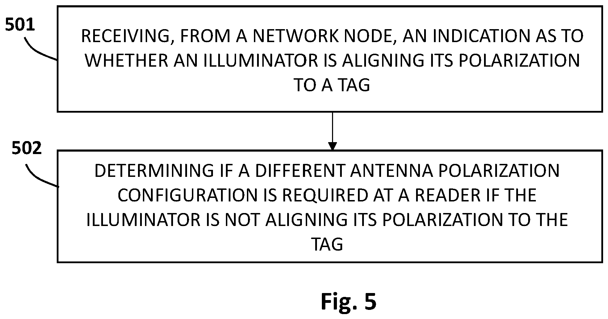

Fig. 5 is a further flow diagram showing operations that may be performed in one or more example embodiments. The operations may be performed in hardware, software, firmware of a combination thereof. The operations may be performed, individually or collectively, by a means, wherein the means may comprise at least one processor, and at least one memory storing instructions that, when executed by the at least one processor, cause performance of the operations. The operations may be performed at or by a reader in an IoT network, for example one or more of the readers 220 shown in Fig. 2.

A first operation 501 may comprise receiving, from a network node, an indication as to whether an illuminator is aligning its (linear) polarization to that of a tag. This may be by means of signaling from a network node such as an LME.

A second operation 502 may comprise determining if a different antenna polarization configuration is required at a reader based on the illuminator not aligning its polarization to that of the tag.

If the indication indicates that the illuminator 210 of Fig. 2 is, for example, still in the process of aligning its own linear polarization to that of the tag 230 (which may use any of the above-described examples) then a reader 220 may still use back-scattered illumination signals for reading purposes, e.g. for presence and/or ranging purposes. However, a reader 220 cannot perform its own linear polarization alignment until it is informed that the illuminator 210 has completed its alignment optimization for the tag 230. It may be that a different antenna polarization configuration is required at a reader 220. If a different antenna polarization configuration is required at a reader 220, the antenna of the reader may use a different one of a plurality of linear antenna configurations for the tag, i.e. for receiving back-scattered illumination signals from the tag. The optimization steps may be similar to those described in relation to the illuminator 201 above.

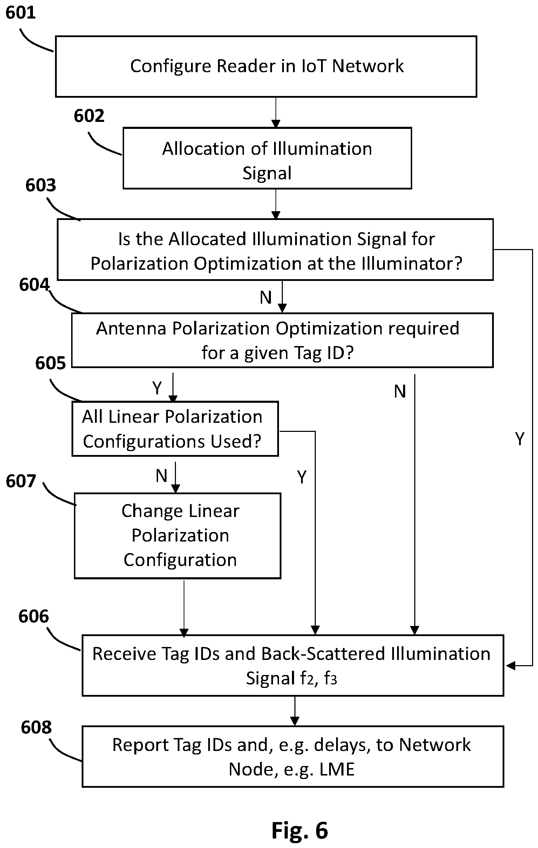

Fig. 6 is a further flow diagram showing operations that may be performed in one or more example embodiments. The operations may be performed in hardware, software, firmware of a combination thereof. The operations may be performed, individually or collectively, by a means, wherein the means may comprise at least one processor, and at least one memory storing instructions that, when executed by the at least one processor, cause performance of the operations. The operations may be performed at or by a reader, for example one or more of the readers 220 shown in Fig. 2.

A first operation 601 may comprise configuring the reader 220 in an IoT network, e.g. the communications network 200. This may involve an external node, such as an LME, informing the reader 220 of its role as a reader and, for example, whether it is for the purposes of determining presence of one or more tags (identified with tag IDs) or their respective ranges for positioning.

A second operation 602 may comprise allocation of the illumination signal. This may involve an external node, such as the LME, allocating time-frequency resources for receiving the back-scattered illumination signal based on one or more harmonics of f0, e.g. f2, f3. This allocation may be done on a per-tag basis, i.e. for each tag ID to be read in the communications network 200 as part of a session.

A third operation 603 may comprise determining if the allocated illumination signal for polarization optimization is ready at the illuminator 210. This may be indicated directly from the illuminator 210 or by a network node such as the LME. In other words, if ready, it signals that the illuminator 210 is still in the process of optimizing its polarization. Illumination signals from the illuminator 210 may still be received and used as before. If not ready, then optimization is not being performed and the process may move to a fourth operation 604.

In the fourth operation 604, it is determined if antenna polarization optimization (or improvement) is required for a given tag ID.

This determination in the fourth operation 604 may be based on any of the aforementioned parameters and considerations described above for the sixth operation 406 described in relation to Fig. 4. For example, it may be that the reader 220 has moved or rotated or a new tag ID has joined the communications network 200.

If antenna polarization optimization is required according to the fourth operation 604, a fifth operation 605 may determine if all of a predetermined number of linear polarization configurations have been used for the particular tag ID. If yes, then a sixth operation 606 may comprise receiving the tag ID and the back-scattered illumination signal on one or more harmonics, e.g. f2 and f3, although f0 and one or more further harmonics might be utilized. If no, then a seventh operation 607 may comprise changing the linear polarization configuration to a different linear polarization configuration for the tag ID. There may be a particular order as to which configurations are used.

The process may then move to the sixth operation 606.

Returning to the third operation 603, if the allocated illumination signal is ready at the illuminator 210, the process may move to the sixth operation 606.

Returning to the fourth operation 604, if antenna polarization optimization is not required for a given tag ID, the process may move to the sixth operation 606.

The sixth operation 606 (receiving the tag ID and the back-scattered illumination signal on one or more harmonics, e.g. f2 and f3) may involve receiving and decoding the back-scattered illumination signals in a largely conventional way, and the operation may move to an eighth operation 608 whereby the received one or more tag IDs and information associated with the back-scattered illumination signals from each, for example respective delays indicative of range, may be reported to another network node, such as the LME.

In overview, example embodiments provide for an illuminator in a passive IoT network to adjust its linear polarization to be closer or the same as that of a particular one or more tags which may have fixed linear polarization. Similarly, example embodiments enable a reader in a passive IoT network to adjust its linear polarization to be closer or the same as that of the particular one or more tags which may have fixed linear polarization. A network node such as an LME or similar may signal to the illuminator and reader(s) to perform polarization alignment. Advantages of example embodiments may include an increase in range over the passive IoT network for a same maximum transmission level of the illumination signal. This is independent of the orientation of the one or more tags, so applicable for scenarios with moving and/or rotating entities such as illuminators, tags and readers.

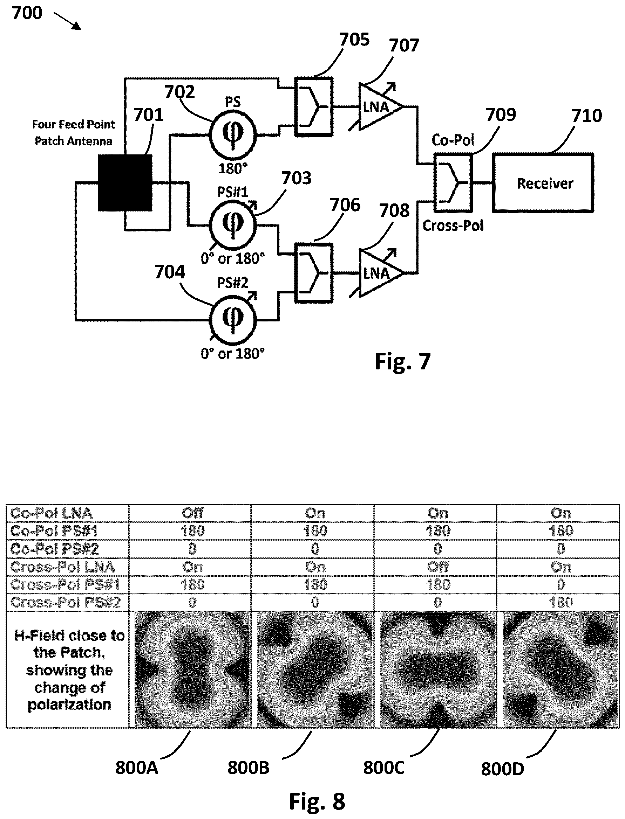

Fig. 7 is a schematic view of an architecture of a receiver 700 which may be used for both the illuminator 210 and one or more readers 220 in a passive IoT network, such as the communications network 200 shown in Fig. 2. The receiver 700 may comprise an antenna 701 to use one of a predetermined number of linear polarization configurations based on parameters associated with a feeding architecture between the antenna and a receiver 710. The antenna 701 may be a four feed point patch antenna, which is merely an example.

As will be seen, first and second feed points of the antenna 701 connect to a first balun comprising a first phase shifter 702 and a first power combiner 705. More specifically, a first feed point connects directly to the first power combiner 705 and a second feed point, opposite the first feed point, connects to the first phase shifter 702. The output of the first phase shifter 702 connects to the first power combiner 705. The output of the first power combiner 705 connects to a first low noise amplifier (LNA) 707 the output of which provides what may be termed a co-polarization signal. This connects to a third power combiner 709.

Third and fourth feed points of the antenna 701 connect to a second reversible balun comprising second and third phase shifters 703, 704 and a second power combiner 706. More specifically, a third feed point connects to the second phase shifter 703 and a fourth feed point connects to the third phase shifter 704. The outputs of the second and third phase shifters 703, 704 connect to the second power combiner 706. The output of the second power combiner 706 connects to a second LNA 708 the output of which provides what may be termed a cross-polarized signal. This connects to the third power combiner 709.

The provision of the first and second rbaluns may be used to increase isolation between the two combined feed points on the antenna 701 and control phase alignment of a dual polarized modulated signal. One of the first and second baluns should be reversible to ensure that polarization can be changed from - 90 degrees to 90 degrees and not just from 0 degrees to 90 degrees or from - 90 degrees to 0 degrees. The gain of the first and second LNAs 707, 708 may be used to change the polarization orientation of the received signal on the antenna 701.

Fig. 8 is a table indicative of, in this case, four different linear polarization configurations 800A - D that can be provided by the FIG. 7 architecture 700. Values of variable parameters including whether the first and second LNAs 707, 708 are Off or On, as well as the phase shift for each of the first, second and third phase shifters 702, 703, 704 are shown in the Fig. 8 table. Note that the LNAs 707, 708 can have different gain values. On and Off will result in, respectively, 0 degrees and +/- 90 degrees depending on which LNA is on and which is off and the direction of the reversible balun; on and on will result in +/- 45 degrees, depending on the direction of the reversible balun. In other words, different LNA gain values will result, in combination with the reversible balun, in values between - 90 degrees and + 90 degrees. It will be seen, for example, that reversal of one of the baluns is needed to enable a 180 degree change of polarization (cross-polarization in this case). Using static baluns for both the co and cross -polarization signals may enable up to 90 degree adjustment, but the shown example permits greater changes. Reversal of a balun can be on either of the combined antenna feed points.

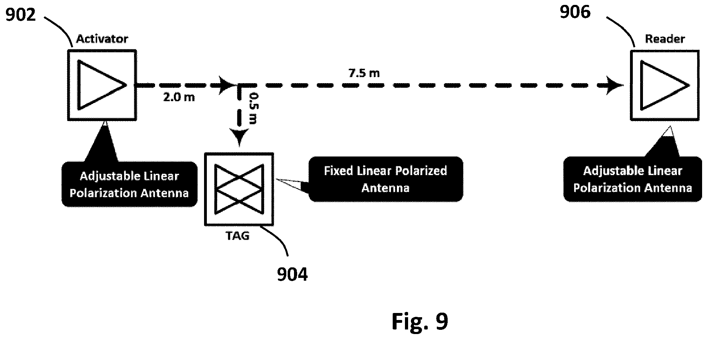

Link level simulations performed using an electromagnetic simulator for a set-up shown in Fig. 9 have been performed. The set-up comprises an illuminator or "activator" 902, a tag 904 and a reader 906 having the shown relations and distances. In accordance with some example embodiments, the tag 904 comprises a fixed linear polarized antenna and the illuminator 902 and reader 906 each comprise an adjustable linear polarized antenna.

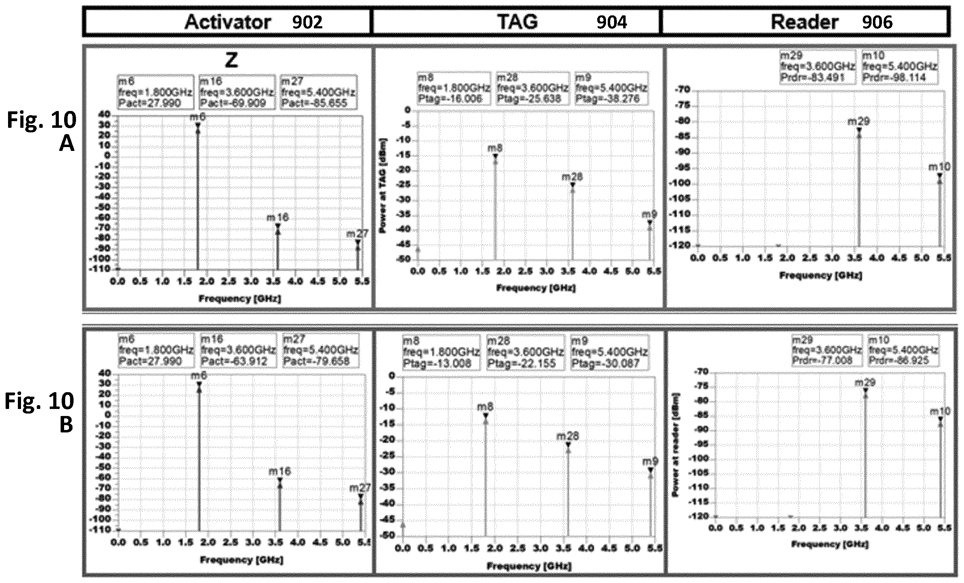

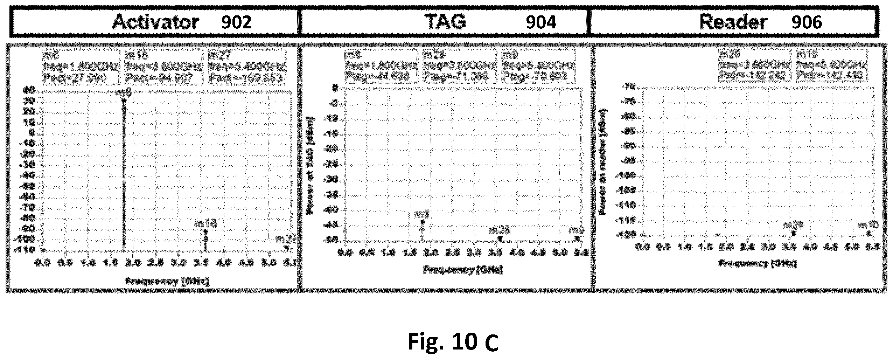

Figs. 10A - C show three sets of simulation results based on the Fig. 9 set-up and operation according to example embodiments described herein. Fig. 10A indicates a reference use-case where polarization conversion is used, i.e. from circular to linear to circular in respect of the illuminator 902, tag 904 and reader 906 respectively, to keep a constant link budget independent of the different entities. Fig. 10B indicates the case where each of the illuminator 902, tag 904 and reader 906 are aligned with linear polarizations according to one or more example embodiments. Fig. 10C indicates the case where each of the illuminator 902, tag 904 and reader are misaligned with linear polarizations.

Table 1, in conjunction with Figs. 10A - C indicate that the capability of harmonic back-scattering from the tag 904 is very dependent on the polarization alignment, as is the generation of harmonics at the tag is very dependent on the absolute power level of f0. Polarization alignment can therefore be seen as a way of increasing the absolute power level at a reader, e.g. the reader 906, and thereby the coverage range of the overall system. This is also valid for f0 even though specific examples focus on harmonics.

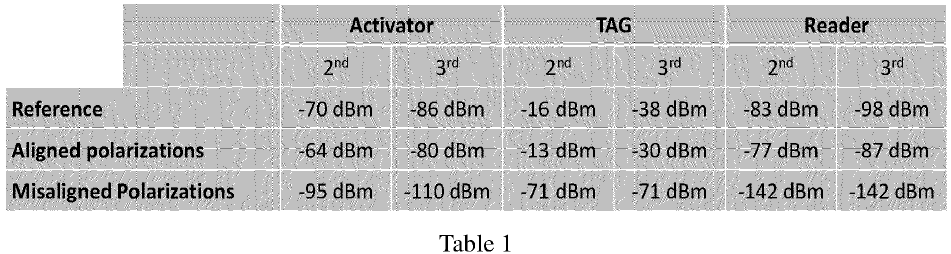

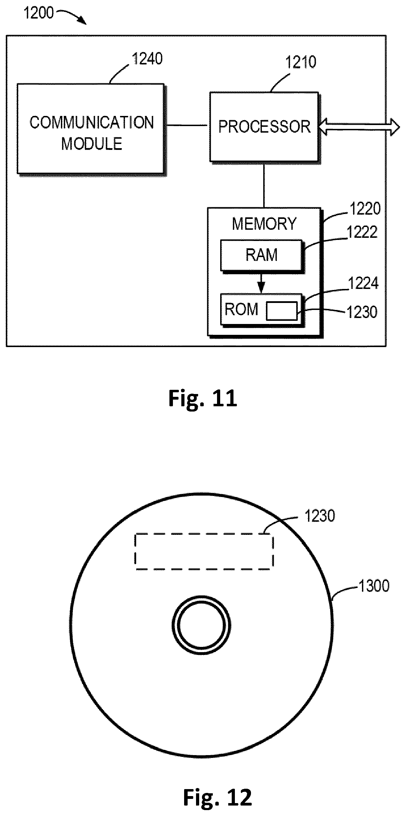

Fig. 11 is a simplified block diagram of a device 1200 that is suitable for implementing embodiments of the present disclosure. The device 1200 may be provided to implement the communication device, for example, the network device 250, the illuminator 210 or the reader 220 as shown in Fig. 2. As shown, the device 1200 includes one or more processors 1210, one or more memories 1220 coupled to the processor 1210, and one or more communication modules 1240 coupled to the processor 1210.

The communication module 1240 is for bidirectional communications. The communication module 1240 has at least one antenna to facilitate communication. The communication interface may represent any interface that is necessary for communication with other network elements.

The processor 1210 may be of any type suitable to the local technical network and may include one or more of the following: general purpose computers, special purpose computers, microprocessors, digital signal processors (DSPs) and processors based on multicore processor architecture, as non-limiting examples. The device 1200 may have multiple processors, such as an application specific integrated circuit chip that is slaved in time to a clock which synchronizes the main processor.

The memory 1220 may include one or more non-volatile memories and one or more volatile memories. Examples of the non-volatile memories include, but are not limited to, a Read Only Memory (ROM) 1224, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1222 and other volatile memories that will not last in the power-down duration.

A computer program 1230 includes computer executable instructions that are executed by the associated processor 1210. The program 1230 may be stored in the ROM 1224. The processor 1210 may perform any suitable actions and processing by loading the program 1230 into the RAM 1222.

The embodiments of the present disclosure may be implemented by means of the program 1230 so that the device 1200 may perform any process of the disclosure as discussed with reference to Figs. 2 to 10. The embodiments of the present disclosure may also be implemented by hardware or by a combination of software and hardware.

In some example embodiments, the program 1230 may be tangibly contained in a computer readable medium which may be included in the device 1200 (such as in the memory 1220) or other storage devices that are accessible by the device 1200. The device 1200 may load the program 1230 from the computer readable medium to the RAM 1222 for execution. The computer readable medium may include any types of tangible non-volatile storage, such as ROM, EPROM, a flash memory, a hard disk, CD, DVD, and the like. Fig. 12 shows an example of the computer readable medium 1300 in form of CD or DVD. The computer readable medium has the program 1230 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 700, 800 and 900 as described above with reference to Figs. 7 to 9. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.
Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus, comprising:
means for providing information associated with an illumination signal, transmitted by an illuminator, back-scatted from a tag and received by an antenna of the illuminator using a first linear polarization configuration;
means for determining that a different antenna polarization is required at the illuminator for the tag;
means for configuring the antenna of the illuminator to use a different one of a plurality of linear polarization configurations for the tag.

2. The apparatus of claim 1, wherein the determining means is configured to determine that a different antenna polarization optimization is required based on the information associated with the back-scattered illumination signal for the tag.

3. The apparatus of claim 2, wherein the information associated with the back-scattered illumination signal comprises respective energy levels associated with one or more harmonics of said back-scattered illumination signal for the tag, wherein optionally the information associated with the back-scattered illuminations signal comprises respective energy levels associated with at least f2 and f3 harmonics of the said back-scattered illumination signal for the tag and/or wherein optionally the determining means is configured to determine that a different antenna polarization optimization is required based on respective energy levels associated with said one or more harmonics being below a predetermined threshold.

4. The apparatus of any preceding claim, wherein the determining means is configured to determine that a different antenna polarization is required based on identifying movement and/or rotation of the illuminator and/or identification of one or more new tags for being illuminated by the illuminator, and/or based on the illuminator being unable to identify the tag and/or to decode data encoded in the information associated with the back-scattered illumination signal.

5. The apparatus of any preceding claim, wherein the determining means is further configured to determine, subsequent to configuring the antenna of the illuminator to use a different linear polarization configuration, if a different linear antenna polarization is still required.

6. The apparatus of claim 5, wherein responsive to determining that antenna polarization is still required at the illuminator, the configuring means is further configured to configure the antenna of the illuminator to use a different one of the plurality of linear polarization configurations unless all linear polarization configurations have been used.

7. The apparatus of any preceding claim, wherein the identifying means is configured to identify, for each of a plurality of tags, either:
a linear polarization configuration for which a different polarization configuration is not required for the tag, or
if all linear polarization configurations have been used for the tag, the most optimal linear polarization configuration,
wherein the apparatus further comprises means for using the identified linear polarization configuration for each of the plurality of passive tags in a round-robin manner.

8. An apparatus, comprising:
means for receiving, from a network node, an indication as to whether an illuminator is aligning its polarization to a tag;
means for determining if a different antenna polarization for an antenna is required at a reader based on the illuminator not aligning its polarization to the tag.

9. The apparatus of claim 8, wherein if the means determines that a different antenna polarization configuration is required at the reader, the apparatus is further configured to configure the reader to use a different one of a plurality of linear antenna configurations for the tag.

10. The apparatus of claim 8 or claim 9, wherein the apparatus is configured to determine that a different antenna polarization optimization is required at the reader based on the information associated with the back-scattered illumination signal for the tag.

11. The apparatus of claim 10, wherein the information associated with the back-scattered illumination signal comprises respective energy levels associated with one or more harmonics of said back-scattered illumination signal for the tag, wherein optionally the information associated with the back-scattered illuminations signal comprises respective energy levels associated with at least f2 and f3 harmonics of the said back-scattered illumination signal and/or optionally determining that a different antenna polarization optimization is required at the reader is based on respective energy levels associated with said one or more harmonics being below a predetermined threshold.

12. The apparatus of claims 8 to 11, wherein determining that a different antenna polarization configuration is required is based on identifying movement and/or rotation of the reader and/or identification of one or more new passive tags being for being read by the reader and/or based on the reader being unable to identify the passive tag and/or to decode data encoded in the information associated with the back-scattered illumination signal.

13. The apparatus of any of claims 8 to 12, wherein the apparatus is further configured to determine, subsequent to configuring the antenna of the reader to use a different linear polarization configuration, if a different linear antenna polarization is still required and optionally wherein responsive to determining that a different linear antenna polarization is still required at the illuminator, the apparatus is further configured to configure the antenna of the reader to use a different one of the plurality of linear polarization configurations unless all linear polarization configurations have been used.

14. A method, the method comprising:
providing information associated with an illumination signal, transmitted by an illuminator, back-scatted from a tag and received by an antenna of the illuminator using a first linear polarization configuration;
determining that a different antenna polarization is required at the illuminator for the tag; and
configuring the antenna of the illuminator to use a different one of a plurality of linear polarization configurations for the tag.

15. A method, the method comprising:
receiving, from a network node, an indication as to whether an illuminator is aligning its polarization to a tag;
determining if a different antenna polarization for an antenna is required at a reader based on the illuminator not aligning its polarization to the tag.
